# EUROPEAN PATENT SPECIFICATION

(11) **EP 3 320 477 B1**
(45) Date of publication and mention of the grant of the patent: **17.02.2021**
(21) Application number: 16824872.2
(22) Date of filing: 23.06.2016
(51) Int. Cl.: G06F 21/62, G06F 21/55, G06F 9/54, G06F 21/60, H04L 29/06, H04W 12/08

(54) **PROTECTING DATA FROM UNAUTHORIZED ACCESS**
SCHUTZ VON DATEN GEGEN UNBERECHTIGTEN ZUGRIFF
PROTECTION DE DONNÉES CONTRE UN ACCÈS NON AUTORISÉ

(30) Priority: 10.07.2015 US 201514795960
(43) Date of publication of application: 16.05.2018
(73) Proprietor: Google LLC, Mountain View, CA 94043 (US)
(72) Inventor: CARTER, Bernadette Alexia, Mountain View, California 94043 (US)
(74) Representative: Colonna, Matthew Oliver
(86) International application number: PCT/US2016/038924
(87) International publication number: WO 2017/011167

(56) References cited:
- CN-A- 103 544 447
- US-A1- 2008 126 799
- US-A1- 2008 215 509
- US-A1- 2013 036 363
- US-A1- 2014 108 963
- US-A1- 2014 344 948
- US-A1- 2015 121 535
- US-A1- 2015 121 535

## Description

### TECHNICAL FIELD

This document generally relates to protecting data from unauthorized access.

### BACKGROUND

Some operating systems provide users with an ability to grant or deny an application program "permission" to access certain types of information or to perform certain functions. As an example, an operating system may include a program that processes electrical signals received from a microphone and makes the resulting audio data available to other application programs. An application program, however, may only be able to access the audio data from the microphone program if a user has explicitly authorized the application program to access such audio data. Without authorization, the application program may be prohibited from accessing the audio data, even if the application program sends a request for the data. On the other hand, other application programs for which the user has granted authorization to access the audio data may still be able to receive the audio data.

Operating systems may include an ability to set and deny permissions to access data because users may be comfortable granting some application programs the ability to access certain types of data (e.g., because the users trust the developers of the applications, or because the accessed data would be helpful to run the applications), but users may not be comfortable granting other application programs the ability to access the same type of data (e.g., because the users are not familiar with the developers, or because the users do not believe that the user experiences are enhanced if the applications have access to the data).
US 2014/108963 A1 discloses a method for tagging media which can include obtaining a media object and presenting the media object within a media tagging interface. Applications can be used within a media tagging platform for different media tagging scenarios. The media tagging platform can set permissions of the application.

### SUMMARY

The described embodiments are to be considered only as illustrative and not restrictive. The scope of the invention is defined by the appended claims, the dependent claims define further embodiments of the invention. This document describes techniques, methods, systems, and other mechanisms for protecting data from unauthorized access. A computing system can identify that an application program is about to receive information that the application program has permission to access, but that the information includes within it data that the application program does not have permission to access. As a result of such identification, the computing system can prevent the application program from receiving the data. For example, the computing system can scrub the data from the information and provide the scrubbed information to the application program, the computing system can block the application program from accessing the information all together (therefore also blocking access to the data within the information). The computer system can also prompt the user to indicate which of these actions to perform (or whether to simply let the information pass to the application program without modification).

As additional description to the embodiments described below, the present disclosure describes the following embodiments.

Embodiment 1 is a computer-implemented method, the method comprising identifying, by a computing system, that an application program does not have permission to access a first type of data that is provided by a first application program. The method comprises identifying, by the computing system, that a second application program has permission to access the first type of data that is provided by the first application program, wherein the second application program provides a second type of data and is able to modify the second type of data to include the first type of data. The method comprises identifying, by the computing system, that the application program has permission to access the second type of data that is provided by the second application program. The method comprises determining, by the computing system, that the second type of data that is provided by the application program and that the application program has permission to access, includes the first type of data. The method comprises performing, by the computing system as a result of having determined that the second type of data includes the first type of data, an action to prevent the first type of data from being provided, in the second type of data, from the second application program to the application program, without user authorization.

Embodiment 2 is the method of embodiment 1, where the method further comprises providing, by the computing system, a user interface with which user input is able to specify whether the application program is to have permission to access the first type of data. The method comprises receiving, by the computing system, user input that specifies that the application program is to not have permission to access the first type of data.

Embodiment 3 is the method of embodiment 1, where the method further comprises providing, by the computing system, a second user interface with which user input is able to specify whether the second application program is to have permission to access the first type of data. The method further comprises receiving, by the computing system, user input that specifies that the second application program is to have permission to access the first type of data.

Embodiment 4 is the method of embodiment 1, wherein performing the action to prevent the first type of data from being provided, in the second type of data, from the second application program to the application program without user authorization includes preventing, by the computing system, the application program from receiving the second type of data that includes the first type of data from the second application program.

Embodiment 5 is the method of embodiment 1, wherein performing the action to prevent the first type of data from being provided, in the second type of data, from the second application program to the application program without user authorization includes removing, by the computing system, the first type of data from the second type of data. It also includes providing, by the computing system, the second type of data from the second application program to the application program with the first type of data removed.

Embodiment 6 is the method of embodiment 1, wherein performing the action to prevent the first type of data from being provided, in the second type of data, from the second application program to the application program without user authorization includes providing, by the computing system, a user interface that indicates that the second type of data that is provided by the second application program includes the first type of data. It also includes receiving, by the computing system, user input that specifies whether the second type of data is to be provided from the second application program to the application program despite the second type of data including the first type of data.

Embodiment 7 is the method of embodiment 1, wherein performing the action to prevent the first type of data from being provided, in the second type of data, from the second application program to the application program without user authorization includes replacing, by the computing system, the first type of data with an identifier that is not of the first type of data and from which the computing system is able to later access the first type of data in response to user input that indicates that the application program has permission to access the first type of data.

Embodiment 8 is the method of embodiment 1, where the method further comprises receiving, by the computing system, user input that specifies that the application program is to have permission to access the first type of data. The method comprises permitting, by the computing system as a result of having identified that the application program has permission to access the first type of data, the second type of data to be provided from the second application program to the application program without user authorization, other than the user input that specifies that the application program is to have the permission to access the first type of data.

Embodiment 9 is the method of embodiment 1, wherein the first type of data is geographical location data and the second type of data is a picture or video.

Embodiment 10 is the method of embodiment 1, wherein the first type of data is a time of day that a file was generated and the second type of data is the file, the first type of data is an author of a document and the second type of data is the document, or the first type of data is a geographical location and the second type of data is calendar event information.

Embodiment 11 is directed to a recordable media having instructions stored thereon, the instructions, when executed by one or more processors, cause performance of actions according the method of any one of embodiments 1 to 10.

Particular implementations can, in certain instances, realize one or more of the following advantages. A computing system can prevent or limit an ability of an application program to access to data that is of a type that the application program does not have permission to access. The security of data may be enhanced, so that a user's confidential information is unable to be accessed by a potentially malicious application. The number of application programs that are able to access a user's confidential information may be reduced. A user may also be notified of an inadvertent flow of data from a first program to a second program, and from the second program to a third program, if the third program does not have permission to access data that is generated by the first program. The user may be provided multiple options to remedying the inadvertent flow of data from the first program to the third program.

The details of one or more implementations are set forth in the accompanying drawings and the description below. Other features, objects, and advantages will be apparent from the description and drawings, and from the claims.

### DESCRIPTION OF DRAWINGS

Figure 1 illustrates a mechanism that prevents data from unauthorized access.
Figure 2A shows an example user interface with which user input is able to select options for responding to unauthorized transmission of data.
Figure 2B shows a user interface with which a user is able to specify the permissions granted to a particular application program.
Figure 3 illustrates a system for protecting data from unauthorized access.
FIGS. 4A-B show a flowchart of a process for protecting data from unauthorized access.
FIG. 5 is a conceptual diagram of a system that may be used to implement the systems and methods described in this document.
FIG. 6 is a block diagram of computing devices that may be used to implement the systems and methods described in this document, as either a client or as a server or plurality of servers.

Like reference symbols in the various drawings indicate like elements.

### DETAILED DESCRIPTION

This document generally describes protecting data from unauthorized access. Users grant and deny application programs "permission" to access certain types of data (e.g., location data and pictures) for various reasons, typically based on the users' level of comfort with an application program having access to certain data, and whether or not users feel that an application program needs certain data to provide a good user experience. A user may expect that denying an application program permission to access a certain type of data prevents that application from being able to access the data, but this may not be the case if the data is embedded within another type of information that the application program is authorized to access.

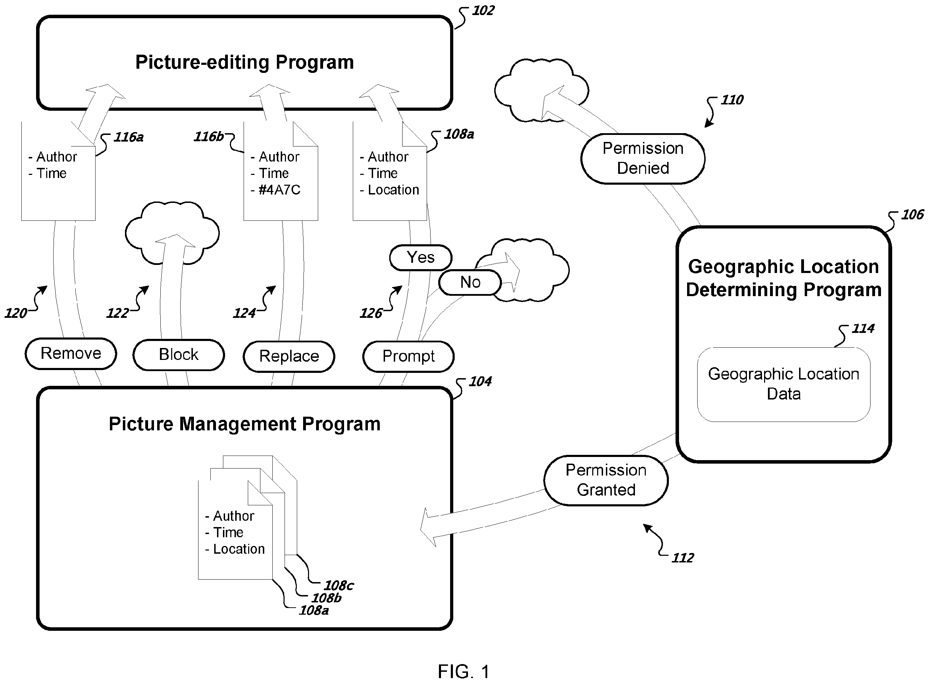

Figure 1 illustrates a mechanism that prevents data from unauthorized access. Suppose that a user has downloaded and installed on his smartphone a picture-editing program 102 that allows the user to edit images (e.g., by applying "filters" to the images). During installation, the user may be prompted to specify whether the picture-editing program 102 will have permission to access pictures that are stored by a picture management program 104 on the device. The user may elect to give the picture-editing program 102 "permission" to access pictures that are stored by the picture management program 104. The user may also be prompted to specify whether the picture-editing program 102 should have permission to obtain geographic location information, but the user may not feel that it is necessary for the picture-editing program 102 to access the user's location, and thus may deny the picture-editing program 102 access to data provided by a geographic location determining program 106 (illustrated by arrow 110 in FIG. 1).

On the other hand, the user may provide the photo management program 104 permission to access location data that is generated by the geographic location determining program 106 (illustrated by arrow 112 in FIG. 1). Because the picture management program 102 has been granted permission to access the geographic location data 114, the picture management program 104 may use the geographic location data 114 to stamp newly-captured pictures 108a-c with the present location at any given moment. Indeed, the representation of picture 108a in Figure 1 includes the text "Author," "Time," and "Location" to indicate that the picture stores metadata that identifies the author of the picture, the time at which the picture was captured, and the location at which the picture was taken.

A problem can arise if the picture-editing program 102 receives picture 108, with its geographic location metadata, because the user did not grant picture-editing program 102 permission to access geographic location metadata. It may not be typical for picture-editing program 102 to parse location data from a received picture, but either through honest or malicious design, the picture-editing program 102 may be able to access the location data and send it to a remote computing system. At this point, the user may have lost control of his or her geographic location data, even though the user may have denied the picture-editing program 102 permission to access the geographic location determining program 106. This issue may arise because the permissions system may be designed to prevent point-to-point transfer of information (e.g., to prevent a transfer of information from the geographic location determining program 106 to the picture-editing program 102) rather than to track the lifecycle of information (e.g., by tracking what happens to geographic location data 114 once the data is provided to a properly authenticated program).

The technology discussed in this application may be able to identify that the picture-editing program 102 does not have permission to access location information (at least when it requests it from the location services program), but that the picture-editing program 102 has requested to access a picture that includes location information. As such, another program executing on the computing system (e.g., a subcomponent of the operating system) may take action to prevent the picture-editing application 102 from accessing the location information in the picture, at least without notifying the user or receiving input from the user that authorizing transfer of the picture. There are multiple techniques that the computing system can apply when it identifies unauthorized data embedded within authorized data, as described in the following examples.

In a first example (illustrated by arrow 120 in Figure 1), the computing system may strip the location information from image 108a to generate modified image 116a, and provide modified image 116a to the picture-editing program 102. As shown in Figure 1, the computing system may leave other metadata in the image (e.g., the author of the image and the time at which the picture was taken). In some examples, the stripping of the location metadata may be performed automatically. In other words, subsequent to the picture-editing program 102 requesting the image 108a from the picture management program 104, the computing system may strip the location metadata from the image without receipt of user input that specifies that the location metadata is to be removed.

As a second example (illustrated by arrow 122 in Figure 1), the computing system may block the picture-editing program 102 from accessing the picture in its entirety. For example, the picture-editing program 102 may have requested a batch import of multiple pictures 108a-c, but may only receive a subset of those files because another component of the computing system may block the transfer of pictures that include location information. As an illustration, the photo gallery in the picture-editing program 102 may only display a subset of the pictures in the user's picture library. The computing system may or may not provide a user notification that the picture-editing program 102 cannot access one or more pictures. In some examples, the user may not be able to override the block that prevents the picture-editing program 102 from accessing pictures with location data (other than by granting the picture-editing program 102 permission to request data from the geographic location determining program 106).

As a third example (illustrated by arrow 124 in Figure 1), the computing system may generate a copy of the image 116b and, in the copy, replace the location information metadata with an identifier. The value of the identifier may not specify a geographical location, but the identifier may be used at some later point in time to resolve the original geographical location information (e.g., if the user later grants the picture-editing program 102 permission request location data from the geographic location determining program 106).

In this example, the identifier may be thought of as a pointer to the location information, and a component of the computing system may mediate whether or not the picture-editing program 102 is able to access the information that is pointed to by the identifier. This may be done in at least two ways. When the picture-editing program 102 requests access to the location metadata (which has been replaced with the identifier), the computing system could either (1) check to see whether the user has granted the picture-editing program 102 permission to obtain location data from the geographic location determining program 106 (e.g., authorization for the geographic location determining program 106 to successfully respond to a request by the picture-editing program 102), or (2) issue a prompt that that user specify whether or not the picture-editing program 102 should access the geographic location that is identified with the identifier (rather than granting picture-editing program 102 global permission to access location information with any picture at any time). To enable this type of identifier resolution, the computing system may store one or more tables that are able to map each identifier to its location data, along with the relevant permission that controls access to the location data (e.g., the permission setting that controls whether picture-editing program 102 can successfully requests location data from geographic location determining program 106).

As a fourth example (illustrated by arrow 126), the computing system may prompt the user to specify how to handle the presence of location information in the picture. In this example, the computing system has determined that the image 108a includes location information, and that the picture-editing program 102 does not have permission to request such information from the geographic location determining program 106, but instead of simply removing the location data (the first example), blocking access to the picture (the second example), or replacing the location data with an identifier (the third example), the computing system permits the user to designate what to do with the image, for example, by presenting a user interface with user-selectable options.

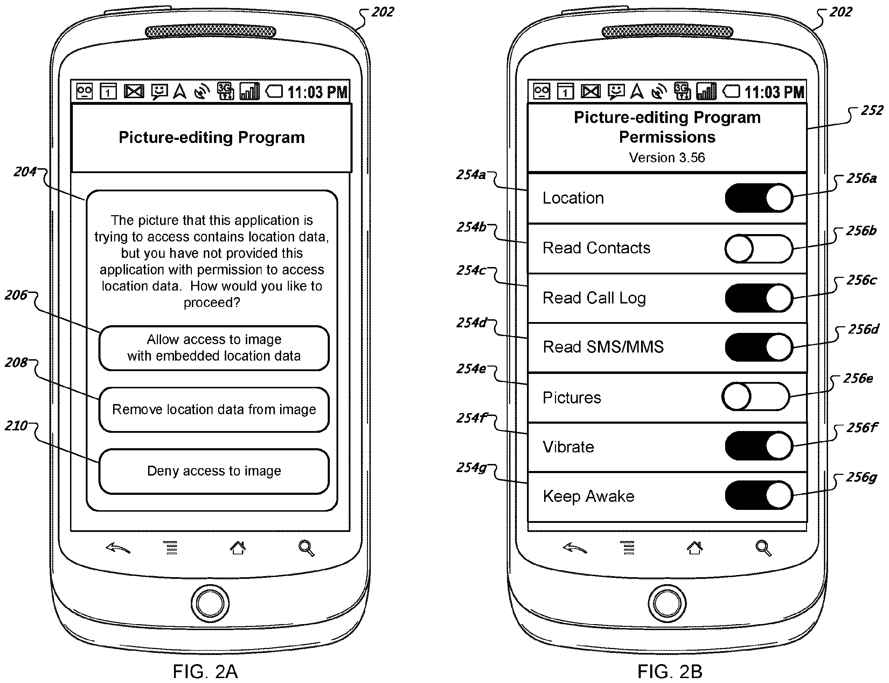

An example user interface with which user input is able to select one of these options is the user interface 204 shown by mobile device 202 in Figure 2A. The user interface 204 in this example is a dialog box that includes text that explains the user-selectable options 206, 208, and 210, and that prompts the user select one of these options, for example, by pressing a region on a touchscreen of the mobile device 202 that corresponds to a display of a graphical interface element for the corresponding option.

Options 206, 208, and 210 enable a user to specify that the computing system should, respectively, (a) allow the application program to access the image even though the image includes location data embedded within the image (option 206), (b) remove the location data from the image before providing the image to the picture-editing program 102 (option 208), or (c) deny access to the image all together (option 210). Other options may be provided, including options to do the above-described actions for not just the current picture but also for all subsequent pictures.

In some implementations, users may specify, through interface 204 or another display interface, a filter to apply to all pictures or all remaining pictures in the collection of pictures stored by picture management program 104. For example, user input may specify that the computing system is to apply a specified action (e.g., one of actions a, b, and c, specified above) only for pictures that are at or not at a certain location (e.g., pictures further than a mile away from a user's house or a current location of a mobile device), and/or only for pictures that satisfy or do not satisfy a certain time criteria (e.g., pictures that were captured more than 30 minutes ago). As such, a user could specify that the computing system allows location information to pass from picture management program 104 to picture-editing program 102 only if the pictures were not recently taken and were not taken near a user's home or a current location of the mobile device.

Figure 2B shows a user interface 252 with which a user is able to specify the permissions granted to a particular application program (e.g., the picture-editing program 102). In some examples, the user interface 252 may be presented by the computing device 202 through user selection of an icon that is displayed in a settings menu of the computing device 202, and the computing device 202 may provide a user interface that is similar to that shown in Figure 2B for every (or at least multiple) application program that executes on the computing device 202.

In this example, a user has selected to view the permissions for the picture-editing program 102, and each of the rows 254a-g identifies a single permission for the picture-editing program 102. For example, row 254a for the location permission includes a user interface element 256a with which a user is able to toggle the permission setting for the location services feature between an enabled and disabled state (also referred to as granted and denied elsewhere in this disclosure). In this example, the user may toggle the permission setting by pressing on a region of a touchscreen at which element 256a is displayed, but one or more different types of user-selectable elements may be substituted for element 256a.

In some examples, rather than each application program having its own user interface that enables a user to specify the permissions for that program, each permission may have its own user interface that enables a user to specify the permission value for multiple programs. For example, there could be a user interface that is titled "Location permissions" which includes a row for each of multiple different programs, where each row includes a selectable element that is similar or the same as those shown in Figure 2B.

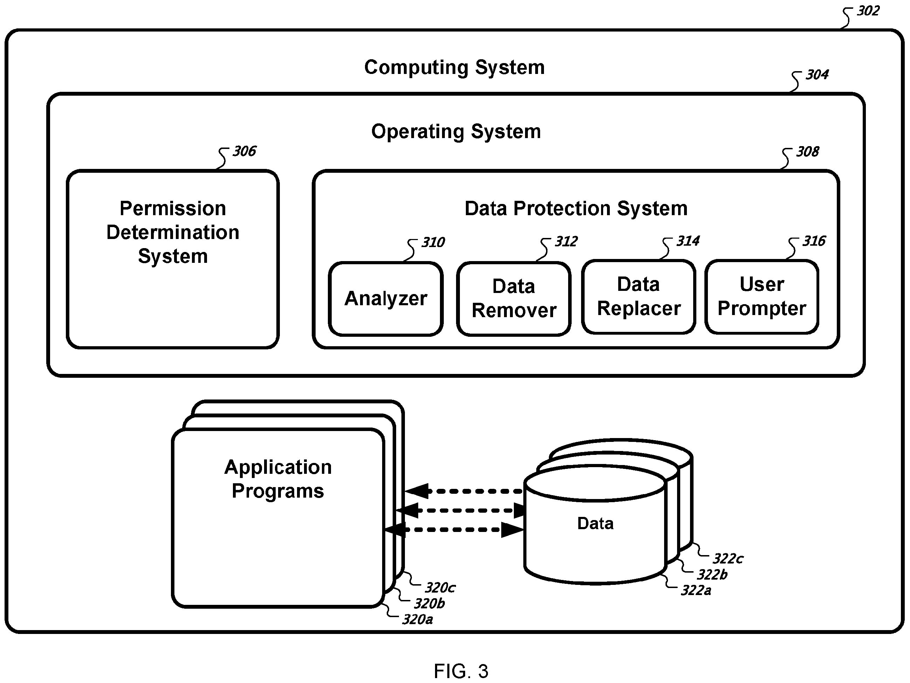

Figure 3 illustrates a system for protecting data from unauthorized access. In this illustration the computing system 302 can represent any of various types of computing systems. For example, it can be a smartphone, a tablet computer, a laptop computer, a desktop computer, a server system, or combinations or variations thereof. In this illustration, computing system 302 may be the same as computing device 202 that is described with respect to Figures 2A-B.

Computing system 302 includes within it a permission determination system 306 and a data protection system 308. These two systems may be external to the application programs 320a-c, and in some implementations are a part of the operating system 304. In other words, the operations performed by the permission determination system 306 and the data protection system 308 may not be a part of the application programs 320a-c (and may not be controllable by those programs), some of which may be third-party application programs that were downloaded to the computing system 302 in response to a user selecting the programs for download (and potentially purchase) from an online application marketplace. Third-party application programs may be application programs that are developed by developers that are distinct from a developer of the operating system 304.

The permission determination system 306 may be a component of the computing system 304 that manages which applications are able to access which types of data. For example, the permission determination system 306 may present the user interface 252 that is shown in Figure 2B, and may solicit user input that specifies, for each application program, whether that application program is able to access certain types of data. The permission determination system 306 may regulate whether a particular application program is able to access a certain type of data. As an example, suppose that the picture-editing program 102 attempts to access the geographic location data 114 by sending a request to the geographic location determining program 106 (FIG. 1). To do so, the permission determination system 306 may need to provide authorization for such request to reach the geographic location determining program 106, or for the geographic location determining program 106 to respond to the request.

As an example, the picture-editing program 102 may ask the permission determination system 306 for permission before the picture-editing program 102 sends it request for the geographic location data 114. As another example, the permission determination system 306 can intercept some or all requests for geographic location data 114 from the picture-editing program 102 (and other programs). If the picture-editing program 102 has permission to request geographic location data 114 (based on the user-specified permission), the permission determination system 306 may forward the request to the geographic location determining program 106. Otherwise, the permission determination system 306 may not forward the request for location information.

In some examples, the geographic location determining program 106 receives the request for location information from the picture-editing program 102, but the geographic location determining program 106 communicates with the permission determination system 306 to identify whether the picture-editing program 102 has permission to access the geographic location data 114. In this example, the geographic location determining program 106 may only return the geographic location data 114 if the permission determination system 306 indicates that picture-editing program 102 has permission to access such data.

In this example, the permission determination system 306 may mediate the transfer of information between various application programs 320a-c. Each of the application programs 320a-c may be a third-party application program that was downloaded from an application marketplace, or may be an application program that was pre-installed on the computing system 302 or that is a part of the operating system. For example, the geographic location determining program 106 (FIG. 1), the picture management program 104 (FIG. 1), and the picture-editing program 102 (FIG. 1) may be examples of application programs 320a-c.

Although some permissions may appear to control access to a set of data (e.g., photos) rather than to an application program, the mediation of access to this data by the permission determination system 306 may involve access to an application program that manages the data. As an example, the picture management program in Figure 1 is described as managing access to pictures 108a-c. For this reason, the application programs 320a-c in Figure 3 is illustrated as being connected with arrows to the data 322a-c. Still, the permission determination system 306 does not always need to control access to an application program and associated data as a set. Rather, in some examples, the permission determination system 306 can mediate access to just a set of stored data or just information produced by an application program without accessing a set of stored data.

In some implementations, the permission determination system 306 is configured to control permissions for point-to-point communications between two programs on a device (potentially with the permission determination system 306 intercepting and mediating the request). In other words, denying a first program permission to access a certain type of data that is generated by a second program involves denying the first program the ability to request the data from the second program (or at least obtain a response to the request that includes the requested data). The permission determination system 306, however, may not be configured to track the certain type of data once it has been properly given to a third program, and whether that third program may pass that data along to other applications.

The data protection system 308 identifies that an application program is attempting to access information that includes data that the application program does not have permission to access, and resolves the conflict. The operations of the data protection system 308 are performed, at least in part, by the analyzer 310, the data remover 312, the data replacer, 314, and the user prompter 316.

The analyzer 310 identifies whether there is a conflict between information that is designated for access by an application program and the permissions for that application program. For example, the analyzer 310 may identify when an application program does not have permission to access a certain type of data, but is obtaining information from another application that does have access to that type of data. (This analysis may also consider information that identifies whether the other application has ever had access to that type of data, such as a log file that records current and past permission settings of application programs and temporary overrides of permission settings.) In such circumstances (e.g., when the other application is determined to have or have had access to the other type of data), the analyzer 310 may parse through information received from the other application to identify whether a file designated for transmission includes the certain type of data. (The analyzer 310 may be configured to not parse the information if both applications have access to the data or neither application has access to the data, to reduce the amount of data that has to be parsed). The analysis can be performed by determining whether any data is located in a certain location in the information (e.g., in a "location" metadata field in a picture) or whether information of a certain type is in the information (e.g., data that is structured in a certain way, such as having a certain length or format, a character in a certain location, certain content, etc.).

In response to the data analyzer flagging a certain set of information (e.g., a file) as including data that the requesting application program does not have permission to access (at least according to a permission that specifies that the requesting application cannot get the data directly from its source), one or more of the data remover 312, the data replacer 314, and the user prompter 316 are invoked. The data remover 312 strips from the information any prohibited data, as described with respect to arrow 120 (FIG. 1). The data replacer 314 replaces the prohibited data with an identifier, as described with respect to arrow 124 (FIG. 1). The user prompter 126 prompts the user to specify which type of action the computing system is to take on the data, as described with respect to arrow 126 (FIG. 1).

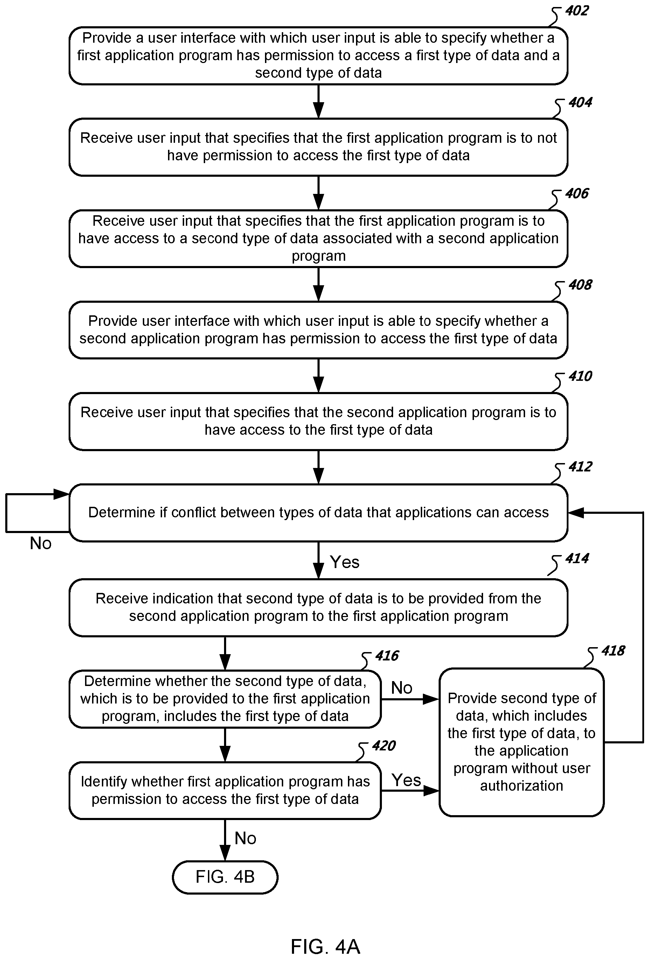

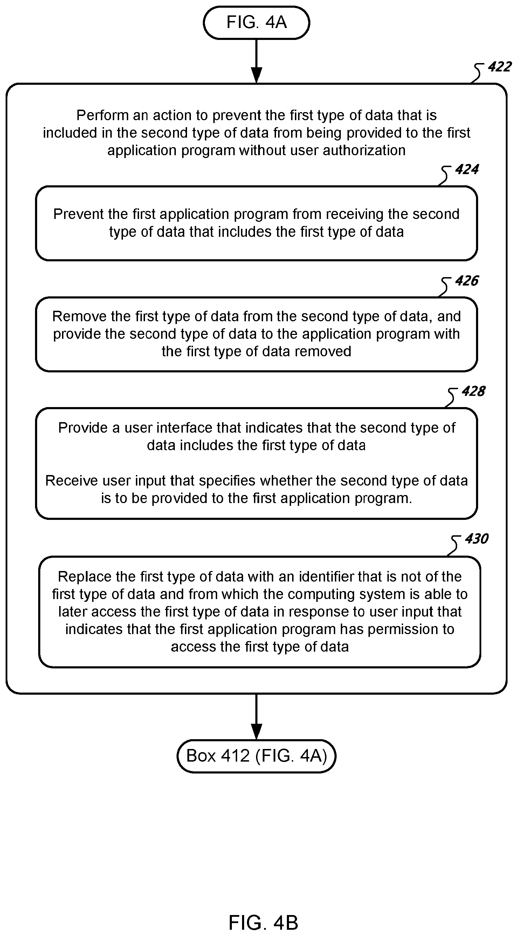

FIGS. 4A-B show a flowchart of a process for protecting data from unauthorized access.

At box 402, the computing system provides a user interface with which user input is able to specify whether a first application program is to have permission to access a first type of data and a second type of data. For example, the permission determination system 306 (FIG. 3) of the computing system may display the user interface 252 (FIG. 2B).

At box 404, the computing system receives user input that specifies that the application program is to not have permission to access the first type of data. For example, user input may interact with the element 256a of user interface 252 (FIG. 2B) to toggle element 256a to an "off" status, to specify that the picture-editing program 102 does not have permission to access location data (e.g., the geographic location data 114), at least directly from the geographic location determining program.

At box 406, the computing system receives user input that specifies that the first application program is to have access to a second type of data. For example, user input may interact with element 256e of user interface 252 (FIG. 2B) to toggle element 256e to an "on" status, to specify that the picture-editing program 102 is to have access to pictures (e.g., the pictures 108a-c). The second type of data may be managed or modifiable by a second application program (the picture management program 104 in this example).

At box 408, the computing system provides a second user interface with which user input is able to specify whether a second application program is to have permission to access the first type of data. For example, the computing system may present a user interface that is similar to that shown in FIG. 2B, but that is for the picture management program 104 rather than the picture-editing program 102 (and thus allows a user to set permissions that are specific to the picture-editing program 102).

At box 410, the computing system receives user input that specifies that the second application program is to have access to the first type of data. For example, user input may interact with the above-described user interface that is similar to that shown in FIG. 2B (but for the picture management program 104), in order to set a "yes" permission for the location data. In this example, the second application program has an ability to edit the above-described second type of data (e.g., pictures). As such, the second application program, which has access to the above-described first type of data (e.g., location data), may be able to insert the first type of data into a second type of data (e.g., pictures), for which the application program has access.

At box 412, the computing system determines if there is a conflict between the types of data that applications are able to access. In other words, the computing system may determine if a first application program has permission to access a type of data from a second application program, and that second application program is able to access data (or has ever had access to data) that the first application program does not have permission to access. Such a determination can be used by the computing system as a basis for determining whether to check information that is designated for transmission from the second application to the first application for data that the first application is not authorized to access. Without the above-described determination, the computing system (e.g., the data protection system 308) may permit the data to be transmitted from the second application program to the first without an analysis of the information for unauthorized data.

At box 414, as a result of determining that there is a conflict (and thus that the information should be checked on a file-by-file basis, for example) the computing system receives an indication that the second type of data is to be transmitted from the second application program to the first application program. For example, the data protection system 308 or a component thereof (e.g., the analyzer 310) may act as a clearinghouse for data transmissions between applications, when those applications have conflicting permission settings. The analyzer 310 may do this by receiving data transmissions that pass between applications and analyzing those data transmissions before forwarding them on to their intended destinations (or stopping transmission to the intended destinations). The analyzer 310 can also do this by being providing a "yes" or "no" answer to a source application program that sends a request to check whether an intended destination application program has permission to access a certain type of data.

At box 416, the computing system determines whether the second type of data that the first application program has permission to access, and that is to be provided to the first application program, includes the first type of data. For example, the analyzer 310 (FIG. 3) may analyze an instance of the second type of data (e.g., a particular picture) to identify whether it includes an instance of the first type of data (e.g., location data). The analyzer 310 can be configured to identify the first type of data based on its location in the second type of data (e.g., being located in a certain field of a file) or based on content (e.g., by having certain characteristics). If the analyzer 310 identifies that the second type of data does not include the first type of data, the analyzer 310 may permit the second type of data to be provided to the first application program without user authorization (e.g., without a prompt and user response that occur after the first application program requests the information from the second application program and before the first application program receives the information) (box 418). The process may then repeat for other instances of data.

At box 420, the computing system identifies whether the first application program has permission to access the first type of data. For example, the data protection system 308 may identify whether the picture-editing program 102 has permission to access location data. In some implementations, the operations of box 420 may be unnecessary and not performed if the computing system already performed the operations of box 412 as a threshold test for determining whether or not to analyze of the second type of data, as described above with respect to box 416. In some implementations, the operations of box 420 can be performed before the operations of box 416 (e.g., so that the computing system first identifies whether an application can access a type of data and then, if the answer is "no," checks to see whether that type of data is in the file that is being transmitted). As such, the operations of boxes 412 and 420 may be similar or identical, but occur at different positions in the process.

At box 422, the computing system performs an action to prevent the first type of data that is included in the second type of data from being provided to the first application program without user authorization. As described with respect to arrows 120, 122, 124, and 126 (FIG. 1), there are various types of action that the computing system is able to perform.

At box 424, the computing system prevents the first application program from receiving the second type of data (which includes the first type of data, among other data). For example, the computing system may block the picture-editing program 102 from accessing a picture that includes location information. In some examples, the originating application program (e.g., the picture management application program 104) sends a request to the data protection system 308 to identify whether the originating application program is permitted to send a particular set of information (e.g., a picture) to the destination application program (e.g., the picture-editing program 102). In some examples, the originating program sends the information to the destination program, and the data protection system 308 intercepts and analyzes the transmission, and has the capability to block transmission.

At box 426, the computing system removes the first type of data from the second type of data, and provides the second type of data to the application program with the first type of data removed. For example, the data remover 312 (FIG. 3) may strip the location metadata 114 from the picture 108a before that picture is provided to the picture-editing program 102 as a "cleaned" or modified picture 116b. The data remover 312 may do this by removing just the location metadata 114, or by removing all metadata from the picture. In some implementations, the removal of the metadata includes inserting different metadata (e.g., metadata that indicates that the original metadata has been removed from the file, such as "FFFF").

At box 428, the computing system provides a user interface that indicates that the second type of data includes the first type of data, and receives user input that specifies whether the second type of data is to be provided to the first application program, despite the second type of data including the first type of data. For example, the computing system may provide the prompt 204 that is shown in Figure 2A and that is described with respect to arrow 126 in Figure 1. A user may provide user input that specifies that the information is to be provided to the destination application program in its original form, that the information is to be modified to strip out the data for which the destination application program does not have permission to access, or that the transmission of the information to the destination application program is to be blocked.

At box 430, the computing system replaces the first type of data with an identifier that is not of the first type of data and from which the computing system is able to later access the first type of data (specifically an instance thereof), in response to user input that indicates that the first application program has permission to access the first type of data. For example, the location metadata in picture 108a may be replaced by a pointer. The picture-editing program 102 or another component of the computing system 302 may be able to use the pointer to retrieve the location information, if the user of the computing system 302 at a later point in time changes the permission for the picture-editing program 102 so that it can access location information. For example, upon a change in permissions, the data protection system 308 may send a communication to the first application program, either transmitting the original data that was removed or notifying the first application program that pointers can be resolved for the original data. Alternatively, application programs may be able to occasionally send a request to the data protection system 308 to determine whether any pointers can be resolved for the corresponding original data.

Although this disclosure describes, for simplicity sake, an example in which the data being transmitted is pictures that include location data, the technology described herein is not limited to these types of data and this technology can apply to many different scenarios. In other words, there are lots of examples of data that an application program does not have permission to access "piggybacking" on other data. For example, pictures, videos, or office documents (e.g., text files or spreadsheets) may include metadata that includes time (e.g., time of day) or authorship information that a destination program may not have permission to access. As another example, calendar event information may include potentially-unauthorized location or picture information (or even the name or details of the event, if a requesting application only needs to know whether the user is busy, and does not need to know what that person is doing). As yet another example, contact information (e.g., contacts in an address book) may include potentially-unauthorized picture information, certain types of contact information, and user notes.

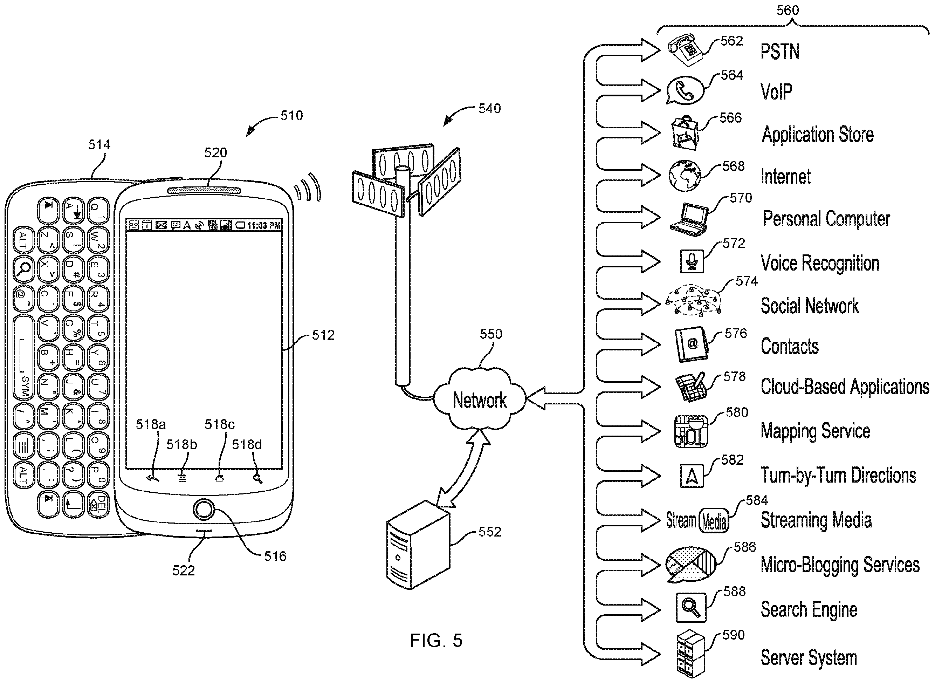

Referring now to FIG. 5, a conceptual diagram of a system that may be used to implement the systems and methods described in this document is illustrated. In the system, mobile computing device 510 can wirelessly communicate with base station 540, which can provide the mobile computing device wireless access to numerous hosted services 560 through a network 550.

In this illustration, the mobile computing device 510 is depicted as a handheld mobile telephone (e.g., a smartphone, or an application telephone) that includes a touchscreen display device 512 for presenting content to a user of the mobile computing device 510 and receiving touch-based user inputs. Other visual, tactile, and auditory output components may also be provided (e.g., LED lights, a vibrating mechanism for tactile output, or a speaker for providing tonal, voice-generated, or recorded output), as may various different input components (e.g., keyboard 514, physical buttons, trackballs, accelerometers, gyroscopes, and magnetometers).

Example visual output mechanism in the form of display device 512 may take the form of a display with resistive or capacitive touch capabilities. The display device may be for displaying video, graphics, images, and text, and for coordinating user touch input locations with the location of displayed information so that the device 510 can associate user contact at a location of a displayed item with the item. The mobile computing device 510 may also take alternative forms, including as a laptop computer, a tablet or slate computer, a personal digital assistant, an embedded system (e.g., a car navigation system), a desktop personal computer, or a computerized workstation.

An example mechanism for receiving user-input includes keyboard 514, which may be a full qwerty keyboard or a traditional keypad that includes keys for the digits '0-9', '*' and '#.' The keyboard 514 receives input when a user physically contacts or depresses a keyboard key. User manipulation of a trackball 516 or interaction with a track pad enables the user to supply directional and rate of movement information to the mobile computing device 510 (e.g., to manipulate a position of a cursor on the display device 512).

The mobile computing device 510 may be able to determine a position of physical contact with the touchscreen display device 512 (e.g., a position of contact by a finger or a stylus). Using the touchscreen 512, various "virtual" input mechanisms may be produced, where a user interacts with a graphical user interface element depicted on the touchscreen 512 by contacting the graphical user interface element. An example of a "virtual" input mechanism is a "software keyboard," where a keyboard is displayed on the touchscreen and a user selects keys by pressing a region of the touchscreen 512 that corresponds to each key.

The mobile computing device 510 may include mechanical or touch sensitive buttons 518a-d. Additionally, the mobile computing device may include buttons for adjusting volume output by the one or more speakers 520, and a button for turning the mobile computing device on or off. A microphone 522 allows the mobile computing device 510 to convert audible sounds into an electrical signal that may be digitally encoded and stored in computer-readable memory, or transmitted to another computing device. The mobile computing device 510 may also include a digital compass, an accelerometer, proximity sensors, and ambient light sensors.

An operating system may provide an interface between the mobile computing device's hardware (e.g., the input/output mechanisms and a processor executing instructions retrieved from computer-readable medium) and software. Some examples of operating systems include ANDROID, CHROME OS, IOS, MAC OS X, WINDOWS 7, WINDOWS PHONE 7, SYMBIAN, BLACKBERRY, WEBOS, a variety of UNIX operating systems; or a proprietary operating system for computerized devices. The operating system may provide a platform for the execution of application programs that facilitate interaction between the computing device and a user.

The mobile computing device 510 may present a graphical user interface with the touchscreen 512. A graphical user interface is a collection of one or more graphical interface elements and may be static (e.g., the display appears to remain the same over a period of time), or may be dynamic (e.g., the graphical user interface includes graphical interface elements that animate without user input).

A graphical interface element may be text, lines, shapes, images, or combinations thereof. For example, a graphical interface element may be an icon that is displayed on the desktop and the icon's associated text. In some examples, a graphical interface element is selectable with user-input. For example, a user may select a graphical interface element by pressing a region of the touchscreen that corresponds to a display of the graphical interface element. In some examples, the user may manipulate a trackball to highlight a single graphical interface element as having focus. User-selection of a graphical interface element may invoke a pre-defined action by the mobile computing device. In some examples, selectable graphical interface elements further or alternatively correspond to a button on the keyboard 504. User-selection of the button may invoke the pre-defined action.

In some examples, the operating system provides a "desktop" graphical user interface that is displayed after turning on the mobile computing device 510, after activating the mobile computing device 510 from a sleep state, after "unlocking" the mobile computing device 510, or after receiving user-selection of the "home" button 518c. The desktop graphical user interface may display several graphical interface elements that, when selected, invoke corresponding application programs. An invoked application program may present a graphical interface that replaces the desktop graphical user interface until the application program terminates or is hidden from view.

User-input may influence an executing sequence of mobile computing device 510 operations. For example, a single-action user input (e.g., a single tap of the touchscreen, swipe across the touchscreen, contact with a button, or combination of these occurring at a same time) may invoke an operation that changes a display of the user interface. Without the user-input, the user interface may not have changed at a particular time. For example, a multi-touch user input with the touchscreen 512 may invoke a mapping application to "zoom-in" on a location, even though the mapping application may have by default zoomed-in after several seconds.

The desktop graphical interface can also display "widgets." A widget is one or more graphical interface elements that are associated with an application program that is executing, and that display on the desktop content controlled by the executing application program. A widget's application program may launch as the mobile device turns on. Further, a widget may not take focus of the full display. Instead, a widget may only "own" a small portion of the desktop, displaying content and receiving touchscreen user-input within the portion of the desktop.

The mobile computing device 510 may include one or more location-identification mechanisms. A location-identification mechanism may include a collection of hardware and software that provides the operating system and application programs an estimate of the mobile device's geographical position. A location-identification mechanism may employ satellite-based positioning techniques, base station transmitting antenna identification, multiple base station triangulation, internet access point IP location determinations, inferential identification of a user's position based on search engine queries, and user-supplied identification of location (e.g., by receiving user a "check in" to a location).

The mobile computing device 510 may include other applications, computing sub-systems, and hardware. A call handling unit may receive an indication of an incoming telephone call and provide a user the capability to answer the incoming telephone call. A media player may allow a user to listen to music or play movies that are stored in local memory of the mobile computing device 510. The mobile device 510 may include a digital camera sensor, and corresponding image and video capture and editing software. An internet browser may enable the user to view content from a web page by typing in an addresses corresponding to the web page or selecting a link to the web page.

The mobile computing device 510 may include an antenna to wirelessly communicate information with the base station 540. The base station 540 may be one of many base stations in a collection of base stations (e.g., a mobile telephone cellular network) that enables the mobile computing device 510 to maintain communication with a network 550 as the mobile computing device is geographically moved. The computing device 510 may alternatively or additionally communicate with the network 550 through a Wi-Fi router or a wired connection (e.g., ETHERNET, USB, or FIREWIRE). The computing device 510 may also wirelessly communicate with other computing devices using BLUETOOTH protocols, or may employ an ad-hoc wireless network.

A service provider that operates the network of base stations may connect the mobile computing device 510 to the network 550 to enable communication between the mobile computing device 510 and other computing systems that provide services 560. Although the services 560 may be provided over different networks (e.g., the service provider's internal network, the Public Switched Telephone Network, and the Internet), network 550 is illustrated as a single network. The service provider may operate a server system 552 that routes information packets and voice data between the mobile computing device 510 and computing systems associated with the services 560.

The network 550 may connect the mobile computing device 510 to the Public Switched Telephone Network (PSTN) 562 in order to establish voice or fax communication between the mobile computing device 510 and another computing device. For example, the service provider server system 552 may receive an indication from the PSTN 562 of an incoming call for the mobile computing device 510. Conversely, the mobile computing device 510 may send a communication to the service provider server system 552 initiating a telephone call using a telephone number that is associated with a device accessible through the PSTN 562.

The network 550 may connect the mobile computing device 510 with a Voice over Internet Protocol (VoIP) service 564 that routes voice communications over an IP network, as opposed to the PSTN. For example, a user of the mobile computing device 510 may invoke a VoIP application and initiate a call using the program. The service provider server system 552 may forward voice data from the call to a VoIP service, which may route the call over the internet to a corresponding computing device, potentially using the PSTN for a final leg of the connection.

An application store 566 may provide a user of the mobile computing device 510 the ability to browse a list of remotely stored application programs that the user may download over the network 550 and install on the mobile computing device 510. The application store 566 may serve as a repository of applications developed by third-party application developers. An application program that is installed on the mobile computing device 510 may be able to communicate over the network 550 with server systems that are designated for the application program. For example, a VoIP application program may be downloaded from the Application Store 566, enabling the user to communicate with the VoIP service 564.

The mobile computing device 510 may access content on the internet 568 through network 550. For example, a user of the mobile computing device 510 may invoke a web browser application that requests data from remote computing devices that are accessible at designated universal resource locations. In various examples, some of the services 560 are accessible over the internet.

The mobile computing device may communicate with a personal computer 570. For example, the personal computer 570 may be the home computer for a user of the mobile computing device 510. Thus, the user may be able to stream media from his personal computer 570. The user may also view the file structure of his personal computer 570, and transmit selected documents between the computerized devices.

A voice recognition service 572 may receive voice communication data recorded with the mobile computing device's microphone 522, and translate the voice communication into corresponding textual data. In some examples, the translated text is provided to a search engine as a web query, and responsive search engine search results are transmitted to the mobile computing device 510.

The mobile computing device 510 may communicate with a social network 574. The social network may include numerous members, some of which have agreed to be related as acquaintances. Application programs on the mobile computing device 510 may access the social network 574 to retrieve information based on the acquaintances of the user of the mobile computing device. For example, an "address book" application program may retrieve telephone numbers for the user's acquaintances. In various examples, content may be delivered to the mobile computing device 510 based on social network distances from the user to other members in a social network graph of members and connecting relationships. For example, advertisement and news article content may be selected for the user based on a level of interaction with such content by members that are "close" to the user (e.g., members that are "friends" or "friends of friends").

The mobile computing device 510 may access a personal set of contacts 576 through network 550. Each contact may identify an individual and include information about that individual (e.g., a phone number, an email address, and a birthday). Because the set of contacts is hosted remotely to the mobile computing device 510, the user may access and maintain the contacts 576 across several devices as a common set of contacts.

The mobile computing device 510 may access cloud-based application programs 578. Cloud-computing provides application programs (e.g., a word processor or an email program) that are hosted remotely from the mobile computing device 510, and may be accessed by the device 510 using a web browser or a dedicated program. Example cloud-based application programs include GOOGLE DOCS word processor and spreadsheet service, GOOGLE GMAIL webmail service, and PICASA picture manager.

Mapping service 580 can provide the mobile computing device 510 with street maps, route planning information, and satellite images. An example mapping service is GOOGLE MAPS. The mapping service 580 may also receive queries and return location-specific results. For example, the mobile computing device 510 may send an estimated location of the mobile computing device and a user-entered query for "pizza places" to the mapping service 580. The mapping service 580 may return a street map with "markers" superimposed on the map that identify geographical locations of nearby "pizza places."

Turn-by-turn service 582 may provide the mobile computing device 510 with turn-by-turn directions to a user-supplied destination. For example, the turn-by-turn service 582 may stream to device 510 a street-level view of an estimated location of the device, along with data for providing audio commands and superimposing arrows that direct a user of the device 510 to the destination.

Various forms of streaming media 584 may be requested by the mobile computing device 510. For example, computing device 510 may request a stream for a pre-recorded video file, a live television program, or a live radio program. Example services that provide streaming media include YOUTUBE and PANDORA.

A micro-blogging service 586 may receive from the mobile computing device 510 a user-input post that does not identify recipients of the post. The micro-blogging service 586 may disseminate the post to other members of the micro-blogging service 586 that agreed to subscribe to the user.

A search engine 588 may receive user-entered textual or verbal queries from the mobile computing device 510, determine a set of internet-accessible documents that are responsive to the query, and provide to the device 510 information to display a list of search results for the responsive documents. In examples where a verbal query is received, the voice recognition service 572 may translate the received audio into a textual query that is sent to the search engine.

These and other services may be implemented in a server system 590. A server system may be a combination of hardware and software that provides a service or a set of services. For example, a set of physically separate and networked computerized devices may operate together as a logical server system unit to handle the operations necessary to offer a service to hundreds of computing devices. A server system is also referred to herein as a computing system.

In various implementations, operations that are performed "in response to" or "as a consequence of" another operation (e.g., a determination or an identification) are not performed if the prior operation is unsuccessful (e.g., if the determination was not performed). Operations that are performed "automatically" are operations that are performed without user intervention (e.g., intervening user input). Features in this document that are described with conditional language may describe implementations that are optional. In some examples, "transmitting" from a first device to a second device includes the first device placing data into a network for receipt by the second device, but may not include the second device receiving the data. Conversely, "receiving" from a first device may include receiving the data from a network, but may not include the first device transmitting the data.

"Determining" by a computing system can include the computing system requesting that another device perform the determination and supply the results to the computing system. Moreover, "displaying" or "presenting" by a computing system can include the computing system sending data for causing another device to display or present the referenced information.

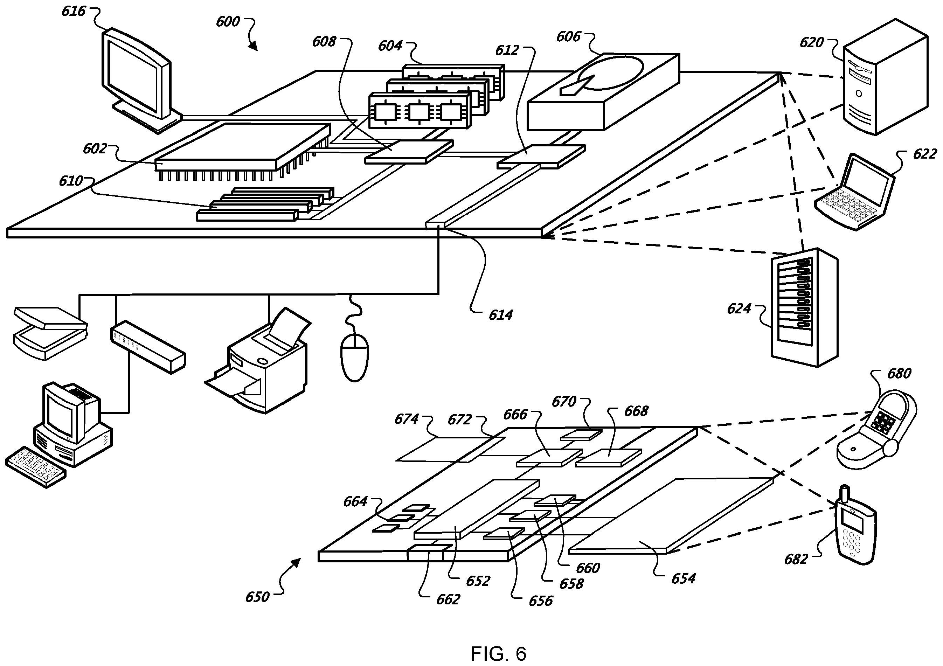

FIG. 6 is a block diagram of computing devices 600, 650 that may be used to implement the systems and methods described in this document, as either a client or as a server or plurality of servers. Computing device 600 is intended to represent various forms of digital computers, such as laptops, desktops, workstations, personal digital assistants, servers, blade servers, mainframes, and other appropriate computers. Computing device 650 is intended to represent various forms of mobile devices, such as personal digital assistants, cellular telephones, smartphones, and other similar computing devices. The components shown here, their connections and relationships, and their functions, are meant to be examples only, and are not meant to limit implementations described and/or claimed in this document.

Computing device 600 includes a processor 602, memory 604, a storage device 606, a high-speed interface 608 connecting to memory 604 and high-speed expansion ports 610, and a low speed interface 612 connecting to low speed bus 614 and storage device 606. Each of the components 602, 604, 606, 608, 610, and 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as display 616 coupled to high-speed interface 608. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multi-processor system).

The memory 604 stores information within the computing device 600. In one implementation, the memory 604 is a volatile memory unit or units. In another implementation, the memory 604 is a non-volatile memory unit or units. The memory 604 may also be another form of computer-readable medium, such as a magnetic or optical disk.

The storage device 606 is capable of providing mass storage for the computing device 600. In one implementation, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 604, the storage device 606, or memory on processor 602.

The high-speed controller 608 manages bandwidth-intensive operations for the computing device 600, while the low speed controller 612 manages lower bandwidth-intensive operations. Such allocation of functions is by way of example only. In one implementation, the high-speed controller 608 is coupled to memory 604, display 616 (e.g., through a graphics processor or accelerator), and to high-speed expansion ports 610, which may accept various expansion cards (not shown). In the implementation, low-speed controller 612 is coupled to storage device 606 and low-speed expansion port 614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. It may also be implemented as part of a rack server system 624. In addition, it may be implemented in a personal computer such as a laptop computer 622. Alternatively, components from computing device 600 may be combined with other components in a mobile device (not shown), such as device 650. Each of such devices may contain one or more of computing device 600, 650, and an entire system may be made up of multiple computing devices 600, 650 communicating with each other.

Computing device 650 includes a processor 652, memory 664, an input/output device such as a display 654, a communication interface 666, and a transceiver 668, among other components. The device 650 may also be provided with a storage device, such as a microdrive or other device, to provide additional storage. Each of the components 650, 652, 664, 654, 666, and 668, are interconnected using various buses, and several of the components may be mounted on a common motherboard or in other manners as appropriate.

The processor 652 can execute instructions within the computing device 650, including instructions stored in the memory 664. The processor may be implemented as a chipset of chips that include separate and multiple analog and digital processors. Additionally, the processor may be implemented using any of a number of architectures. For example, the processor 410 may be a CISC (Complex Instruction Set Computers) processor, a RISC (Reduced Instruction Set Computer) processor, or a MISC (Minimal Instruction Set Computer) processor. The processor may provide, for example, for coordination of the other components of the device 650, such as control of user interfaces, applications run by device 650, and wireless communication by device 650.

Processor 652 may communicate with a user through control interface 658 and display interface 656 coupled to a display 654. The display 654 may be, for example, a TFT (Thin-Film-Transistor Liquid Crystal Display) display or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may be provided in communication with processor 652, so as to enable near area communication of device 650 with other devices. External interface 662 may provide, for example, for wired communication in some implementations, or for wireless communication in other implementations, and multiple interfaces may also be used.

The memory 664 stores information within the computing device 650. The memory 664 can be implemented as one or more of a computer-readable medium or media, a volatile memory unit or units, or a non-volatile memory unit or units. Expansion memory 674 may also be provided and connected to device 650 through expansion interface 672, which may include, for example, a SIMM (Single In Line Memory Module) card interface. Such expansion memory 674 may provide extra storage space for device 650, or may also store applications or other information for device 650. Specifically, expansion memory 674 may include instructions to carry out or supplement the processes described above, and may include secure information also. Thus, for example, expansion memory 674 may be provided as a security module for device 650, and may be programmed with instructions that permit secure use of device 650. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 664, expansion memory 674, or memory on processor 652 that may be received, for example, over transceiver 668 or external interface 662.

Device 650 may communicate wirelessly through communication interface 666, which may include digital signal processing circuitry where necessary. Communication interface 666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 668. In addition, short-range communication may occur, such as using a Bluetooth, WiFi, or other such transceiver (not shown). In addition, GPS (Global Positioning System) receiver module 670 may provide additional navigation- and location-related wireless data to device 650, which may be used as appropriate by applications running on device 650.

Device 650 may also communicate audibly using audio codec 660, which may receive spoken information from a user and convert it to usable digital information. Audio codec 660 may likewise generate audible sound for a user, such as through a speaker, e.g., in a handset of device 650. Such sound may include sound from voice telephone calls, may include recorded sound (e.g., voice messages, music files, etc.) and may also include sound generated by applications operating on device 650.

The computing device 650 may be implemented in a number of different forms, some of which are shown in the figure. For example, it may be implemented as a cellular telephone 680. It may also be implemented as part of a smartphone 682, personal digital assistant, or other similar mobile device.

Additionally computing device 600 or 650 can include Universal Serial Bus (USB) flash drives. The USB flash drives may store operating systems and other applications. The USB flash drives can include input/output components, such as a wireless transmitter or USB connector that may be inserted into a USB port of another computing device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. Moreover, other mechanisms for performing the systems and methods described in this document may be used. In addition, the logic flows depicted in the figures do not require the particular order shown, or sequential order, to achieve desirable results. Other steps may be provided, or steps may be eliminated, from the described flows, and other components may be added to, or removed from, the described systems. Accordingly, other implementations are within the scope of the following claims.

## Claims

1. A computer-implemented method, comprising:
identifying, by a computing system, that an application program does not have permission to access a first type of data that is provided by a first application program;
identifying, by the computing system, that a second application program has permission to access the first type of data that is provided by the first application program, wherein the second application program provides a second type of data and is able to modify the second type of data to include the first type of data;
identifying, by the computing system, that the application program has permission to access the second type of data that is provided by the second application program;
determining, by the computing system, that the second type of data that is provided by the second application program and that the application program has permission to access, includes the first type of data; and
as a result of having identified that the application program does not have permission to access the first type of data that is provided by the first application program, and having determined that the second type of data includes the first type of data embedded in the second type of data, performing, by the computing system, an action to prevent the first type of data from being provided, in the second type of data, from the second application program to the application program, without user authorization.

2. The computer-implemented method of claim 1, further comprising:
providing, by the computing system, a user interface with which user input is able to specify whether the application program is to have permission to access the first type of data; and
receiving, by the computing system, user input that specifies that the application program is to not have permission to access the first type of data,
and optionally further comprising:
providing, by the computing system, a second user interface with which user input is able to specify whether the second application program is to have permission to access the first type of data; and
receiving, by the computing system, user input that specifies that the second application program is to have permission to access the first type of data.

3. The computer-implemented method of claim 1, wherein performing the action to prevent the first type of data from being provided, in the second type of data, from the second application program to the application program without user authorization includes:
preventing, by the computing system, the application program from receiving the second type of data that includes the first type of data from the second application program.

4. The computer-implemented method of claim 1, wherein performing the action to prevent the first type of data from being provided, in the second type of data, from the second application program to the application program without user authorization includes:
removing, by the computing system, the first type of data from the second type of data; and
providing, by the computing system, the second type of data from the second application program to the application program with the first type of data removed.

5. The computer-implemented method of claim 1, wherein performing the action to prevent the first type of data from being provided, in the second type of data, from the second application program to the application program without user authorization includes:
replacing, by the computing system, the first type of data with an identifier that is not of the first type of data and from which the computing system is able to later access the first type of data in response to user input that indicates that the application program has permission to access the first type of data.

6. The computer-implemented method of claim 1, further comprising:
receiving, by the computing system, user input that specifies that the application program is to have permission to access the first type of data; and
permitting, by the computing system as a result of having identified that the application program has permission to access the first type of data, the second type of data to be provided from the second application program to the application program without user authorization, other than the user input that specifies that the application program is to have the permission to access the first type of data.

7. The computer-implemented method of claim 1, wherein:
the first type of data is geographical location data and the second type of data is a picture or video.

8. One or more computer-readable devices including instructions that, when executed by one or more processors, cause performance of operations that include:
identifying, by a computing system, that an application program does not have permission to access a first type of data that is provided by a first application program;
identifying, by the computing system, that a second application program has permission to access the first type of data that is provided by the first application program, wherein the second application program provides a second type of data and is able to modify the second type of data to include the first type of data;
identifying, by the computing system, that the application program has permission to access the second type of data that is provided by the second application program;
determining, by the computing system, that the second type of data that is provided by the second application program and that the application program has permission to access, includes the first type of data; and
performing, by the computing system as a result of having identified that the application program does not have permission to access the first type of data that is provided by the first application program and having determined that the second type of data includes the first type of data embedded in the second type of data, an action to prevent the first type of data from being provided, in the second type of data, from the second application program to the application program, without user authorization.

9. The one or more computer-readable devices of claim 8, wherein the operations further comprise:
providing, by the computing system, a user interface with which user input is able to specify whether the application program is to have permission to access the first type of data; and
receiving, by the computing system, user input that specifies that the application program is to not have permission to access the first type of data,
and optionally wherein the operations further comprise:
providing, by the computing system, a second user interface with which user input is able to specify whether the second application program is to have permission to access the first type of data; and
receiving, by the computing system, user input that specifies that the second application program is to have permission to access the first type of data.

10. The one or more computer-readable devices of claim 8, wherein performing the action to prevent the first type of data from being provided, in the second type of data, from the second application program to the application program without user authorization includes:
preventing, by the computing system, the application program from receiving the second type of data that includes the first type of data from the second application program.

11. The one or more computer-readable devices of claim 8, wherein performing the action to prevent the first type of data from being provided, in the second type of data, from the second application program to the application program without user authorization includes:
removing, by the computing system, the first type of data from the second type of data; and
providing, by the computing system, the second type of data from the second application program to the application program with the first type of data removed.

12. The one or more computer-readable devices of claim 8, wherein performing the action to prevent the first type of data from being provided, in the second type of data, from the second application program to the application program without user authorization includes:
providing, by the computing system, a user interface that indicates that the second type of data that is provided by the second application program includes the first type of data; and
receiving, by the computing system, user input that specifies whether the second type of data is to be provided from the second application program to the application program despite the second type of data including the first type of data.

13. The one or more computer-readable devices of claim 8, wherein performing the action to prevent the first type of data from being provided, in the second type of data, from the second application program to the application program without user authorization includes:
replacing, by the computing system, the first type of data with an identifier that is not of the first type of data and from which the computing system is able to later access the first type of data in response to user input that indicates that the application program has permission to access the first type of data.

14. The one or more computer-readable devices of claim 8, wherein the operations further comprise:
receiving, by the computing system, user input that specifies that the application program is to have permission to access the first type of data; and
permitting, by the computing system as a result of having identified that the application program has permission to access the first type of data, the second type of data to be provided from the second application program to the application program without user authorization, other than the user input that specifies that the application program is to have the permission to access the first type of data.

15. The one or more computer-readable devices of claim 8, wherein:
the first type of data is geographical location data and the second type of data is a picture or video;
the first type of data is a time of day that a file was generated and the second type of data is the file;
the first type of data is an author of a document and the second type of data is the document; or
the first type of data is a geographical location and the second type of data is calendar event information.

## Patentansprüche

1. Computerimplementiertes Verfahren, umfassend:
Identifizieren, durch ein Computersystem, dass ein Anwendungsprogramm nicht die Berechtigung hat, auf einen ersten Datentyp zuzugreifen, der von einem ersten Anwendungsprogramm bereitgestellt wird;
Identifizieren, durch das Computersystem, dass ein zweites Anwendungsprogramm die Berechtigung hat, auf den ersten Datentyp zuzugreifen, der von dem ersten Anwendungsprogramm bereitgestellt wird, wobei das zweite Anwendungsprogramm einen zweiten Datentyp bereitstellt und in der Lage ist, den zweiten Datentyp zu modifizieren, um den ersten Datentyp zu beinhalten;
Identifizieren, durch das Computersystem, dass das Anwendungsprogramm die Berechtigung hat, auf den zweiten Datentyp zuzugreifen, der von dem zweiten Anwendungsprogramm bereitgestellt wird;
Ermitteln, durch das Computersystem, dass der zweite Datentyp, der von dem zweiten Anwendungsprogramm bereitgestellt wird und auf den das Anwendungsprogramm zugreifen darf, den ersten Datentyp beinhaltet; und
infolge des Identifizierens, dass das Anwendungsprogramm keine Berechtigung zum Zugreifen auf den ersten Datentyp hat, der von dem ersten Anwendungsprogramm bereitgestellt wird, und des Ermittelns, dass der zweite Datentyp den ersten Datentyp beinhaltet, der in den zweiten Datentyp eingebunden ist, Ausführen einer Aktion durch das Computersystem, um zu verhindern, dass der erste Datentyp in dem zweiten Datentyp von dem zweiten Anwendungsprogramm an das Anwendungsprogramm ohne Benutzerberechtigung bereitgestellt wird.

2. Computerimplementiertes Verfahren nach Anspruch 1, ferner umfassend:
Bereitstellen, durch das Computersystem, einer Benutzeroberfläche, mit der durch eine Benutzereingabe festgelegt werden kann, ob das Anwendungsprogramm die Berechtigung zum Zugreifen auf den ersten Datentyp haben soll; und
Empfangen, durch das Computersystem, einer Benutzereingabe, die angibt, dass das Anwendungsprogramm nicht die Berechtigung zum Zugriff auf den ersten Datentyp haben soll,
und optional ferner umfassend:
Bereitstellen, durch das Computersystem, einer zweiten Benutzeroberfläche, mit der durch eine Benutzereingabe festgelegt werden kann, ob das zweite Anwendungsprogramm die Berechtigung zum Zugreifen auf den ersten Datentyp haben soll; und
Empfangen, durch das Computersystem, einer Benutzereingabe, die angibt, dass das zweite Anwendungsprogramm die Berechtigung zum Zugriff auf den ersten Datentyp haben soll.

3. Computerimplementiertes Verfahren nach Anspruch 1, wobei das Durchführen der Aktion zum Verhindern des Bereitstellens des ersten Datentyps im zweiten Datentyp vom zweiten Anwendungsprogramm an das Anwendungsprogramm ohne Benutzerautorisierung beinhaltet:
Verhindern, durch das Computersystem, dass das Anwendungsprogramm den zweiten Datentyp, der den ersten Datentyp beinhaltet, vom zweiten Anwendungsprogramm empfängt.

4. Computerimplementiertes Verfahren nach Anspruch 1, wobei das Durchführen der Aktion zum Verhindern des Bereitstellens des ersten Datentyps im zweiten Datentyp vom zweiten Anwendungsprogramm an das Anwendungsprogramm ohne Benutzerautorisierung beinhaltet:
Entfernen, durch das Computersystem, des ersten Datentyps von dem zweiten Datentyp; und
Bereitstellen, durch das Computersystem, des zweiten Datentyps vom zweiten Anwendungsprogramm an das Anwendungsprogramm, wobei der erste Datentyp entfernt wird.

5. Computerimplementiertes Verfahren nach Anspruch 1, wobei das Durchführen der Aktion zum Verhindern des Bereitstellens des ersten Datentyps im zweiten Datentyp vom zweiten Anwendungsprogramm an das Anwendungsprogramm ohne Benutzerautorisierung beinhaltet:
Ersetzen, durch das Computersystem, des ersten Datentyps durch einen Identifikator, der nicht vom ersten Datentyp ist und von dem das Computersystem später auf den ersten Datentyp zugreifen kann, in Reaktion auf eine Benutzereingabe, die angibt, dass das Anwendungsprogramm die Berechtigung zum Zugriff auf den ersten Datentyp hat.

6. Computerimplementiertes Verfahren nach Anspruch 1, ferner umfassend:
Empfangen, durch das Computersystem, einer Benutzereingabe, die angibt, dass das Anwendungsprogramm die Berechtigung zum Zugriff auf den ersten Datentyp haben soll; und
Genehmigen, durch das Computersystem infolge des Identifizierens, dass das Anwendungsprogramm die Berechtigung hat, auf den ersten Datentyp zuzugreifen, dass der zweite Datentyp von dem zweiten Anwendungsprogramm an das Anwendungsprogramm ohne Benutzerautorisierung bereitgestellt wird, mit Ausnahme der Benutzereingabe, die angibt, dass das Anwendungsprogramm die Berechtigung haben soll, auf den ersten Datentyp zuzugreifen.

7. Computerimplementiertes Verfahren nach Anspruch 1, wobei:
der erste Datentyp geografische Standortdaten sind und der zweite Datentyp ein Bild oder Video ist.

8. Ein oder mehrere computerlesbare Geräte, die Anweisungen beinhalten, die bei Ausführung durch einen oder mehrere Prozessoren, die Durchführung von Operationen veranlassen, die Folgendes beinhalten:
Identifizieren, durch ein Computersystem, dass ein Anwendungsprogramm nicht die Berechtigung hat, auf einen ersten Datentyp zuzugreifen, der von einem ersten Anwendungsprogramm bereitgestellt wird;
Identifizieren, durch das Computersystem, dass ein zweites Anwendungsprogramm die Berechtigung hat, auf den ersten Datentyp zuzugreifen, der von dem ersten Anwendungsprogramm bereitgestellt wird, wobei das zweite Anwendungsprogramm einen zweiten Datentyp bereitstellt und in der Lage ist, den zweiten Datentyp zu modifizieren, um den ersten Datentyp zu beinhalten;
Identifizieren, durch das Computersystem, dass das Anwendungsprogramm die Berechtigung hat, auf den zweiten Datentyp zuzugreifen, der von dem zweiten Anwendungsprogramm bereitgestellt wird;
Ermitteln, durch das Computersystem, dass der zweite Datentyp, der von dem zweiten Anwendungsprogramm bereitgestellt wird und auf den das Anwendungsprogramm zugreifen darf, den ersten Datentyp beinhaltet; und
Durchführen, durch das Computersystem, infolge des Identifizierens, dass das Anwendungsprogramm keine Berechtigung zum Zugreifen auf den ersten Datentyp hat, der von dem ersten Anwendungsprogramm bereitgestellt wird, und des Ermittelns, dass der zweite Datentyp den ersten Datentyp beinhaltet, der in den zweiten Datentyp eingebunden ist, einer Aktion, um zu verhindern, dass der erste Datentyp in dem zweiten Datentyp von dem zweiten Anwendungsprogramm an das Anwendungsprogramm ohne Benutzerberechtigung bereitgestellt wird.

9. Ein oder mehrere computerlesbare Geräte nach Anspruch 8, wobei die Operationen ferner Folgendes umfassen:
Bereitstellen, durch das Computersystem, einer Benutzeroberfläche, mit der durch eine Benutzereingabe festgelegt werden kann, ob das Anwendungsprogramm die Berechtigung zum Zugreifen auf den ersten Datentyp haben soll; und
Empfangen, durch das Computersystem, einer Benutzereingabe, die angibt, dass das Anwendungsprogramm nicht die Berechtigung zum Zugriff auf den ersten Datentyp haben soll,
und optional wobei die Operationen ferner umfassen:
Bereitstellen, durch das Computersystem, einer zweiten Benutzeroberfläche, mit der durch eine Benutzereingabe festgelegt werden kann, ob das zweite Anwendungsprogramm die Berechtigung zum Zugreifen auf den ersten Datentyp haben soll; und
Empfangen, durch das Computersystem, einer Benutzereingabe, die angibt, dass das zweite Anwendungsprogramm die Berechtigung zum Zugriff auf den ersten Datentyp haben soll.

10. Ein oder mehrere computerlesbare Geräte nach Anspruch 8, wobei das Durchführen der Aktion zum Verhindern des Bereitstellens des ersten Datentyps im zweiten Datentyp vom zweiten Anwendungsprogramm an das Anwendungsprogramm ohne Benutzerautorisierung beinhaltet:
Verhindern, durch das Computersystem, dass das Anwendungsprogramm den zweiten Datentyp, der den ersten Datentyp beinhaltet, vom zweiten Anwendungsprogramm empfängt.

11. Ein oder mehrere computerlesbare Geräte nach Anspruch 8, wobei das Durchführen der Aktion zum Verhindern des Bereitstellens des ersten Datentyps im zweiten Datentyp,
vom zweiten Anwendungsprogramm an das Anwendungsprogramm ohne Benutzerautorisierung beinhaltet:
Entfernen, durch das Computersystem, des ersten Datentyps von dem zweiten Datentyp; und
Bereitstellen, durch das Computersystem, des zweiten Datentyps vom zweiten Anwendungsprogramm an das Anwendungsprogramm, wobei der erste Datentyp entfernt wird.

12. Ein oder mehrere computerlesbare Geräte nach Anspruch 8, wobei das Durchführen der Aktion zum Verhindern des Bereitstellens des ersten Datentyps im zweiten Datentyp vom zweiten Anwendungsprogramm an das Anwendungsprogramm ohne Benutzerautorisierung beinhaltet:
Bereitstellen, durch das Computersystem, einer Benutzeroberfläche, die angibt, dass der zweite Datentyp, der durch das zweite Anwendungsprogramm bereitgestellt wird, den ersten Datentyp beinhaltet; und
Empfangen, durch das Computersystem, einer Benutzereingabe, die angibt, ob der zweite Datentyp vom zweiten Anwendungsprogramm an das Anwendungsprogramm bereitgestellt werden soll, obwohl der zweite Datentyp den ersten Datentyp beinhaltet.

13. Ein oder mehrere computerlesbare Geräte nach Anspruch 8, wobei das Durchführen der Aktion zum Verhindern des Bereitstellens des ersten Datentyps im zweiten Datentyp vom zweiten Anwendungsprogramm an das Anwendungsprogramm ohne Benutzerautorisierung beinhaltet:
Ersetzen, durch das Computersystem, des ersten Datentyps durch einen Identifikator, der nicht vom ersten Datentyp ist und von dem das Computersystem später auf den ersten Datentyp zugreifen kann, in Reaktion auf eine Benutzereingabe, die angibt, dass das Anwendungsprogramm die Berechtigung zum Zugriff auf den ersten Datentyp hat.

14. Ein oder mehrere computerlesbare Geräte nach Anspruch 8, wobei die Operationen ferner Folgendes umfassen:
Empfangen, durch das Computersystem, einer Benutzereingabe, die angibt, dass das Anwendungsprogramm die Berechtigung zum Zugriff auf den ersten Datentyp haben soll; und
Genehmigen, durch das Computersystem infolge des Identifizierens, dass das Anwendungsprogramm die Berechtigung hat, auf den ersten Datentyp zuzugreifen, dass der zweite Datentyp von dem zweiten Anwendungsprogramm an das Anwendungsprogramm ohne Benutzerautorisierung bereitgestellt wird, mit Ausnahme der Benutzereingabe, die angibt, dass das Anwendungsprogramm die Berechtigung haben soll, auf den ersten Datentyp zuzugreifen.

15. Ein oder mehrere computerlesbare Geräte nach Anspruch 8, wobei:
der erste Datentyp geografische Standortdaten sind und der zweite Datentyp ein Bild oder Video ist;
der erste Datentyp eine Tageszeit ist, zu der eine Datei erzeugt wurde, und der zweite Datentyp die Datei ist;
der erste Datentyp ein Autor eines Dokuments ist und der zweite Datentyp das Dokument ist; oder
der erste Datentyp geografische Standortdaten sind und der zweite Datentyp Kalenderereignisinformationen sind.

## Revendications

1. Procédé mis en œuvre par ordinateur, comprenant :
l'identification, par un système informatique, qu'un programme d'application n'est pas habilité à accéder à un premier type de données qui est fourni par un premier programme d'application ;
l'identification, par le système informatique, qu'un deuxième programme d'application est habilité à accéder au premier type de données qui est fourni par le premier programme d'application, dans lequel le deuxième programme d'application fournit un deuxième type de données et est apte à modifier le deuxième type de données pour inclure le premier type de données ;
l'identification, par le système informatique, que le programme d'application est habilité à accéder au deuxième type de données qui est fourni par le deuxième programme d'application ;
la détermination, par le système informatique, que le deuxième type de données qui est fourni par le deuxième programme d'application et auquel le programme d'application est habilité à accéder, inclut le premier type de données ; et
en raison de l'identification que le programme d'application n'est pas habilité à accéder au premier type de données qui est fourni par le premier programme d'application et de la détermination que le deuxième type de données inclut le premier type de données incorporé dans le deuxième type de données, la réalisation, par le système informatique, d'une action pour empêcher la fourniture du premier type de données, dans le deuxième type de données, depuis le deuxième programme d'application vers le programme d'application, sans autorisation de l'utilisateur.

2. Procédé mis en œuvre par ordinateur selon la revendication 1, comprenant en outre :
la fourniture, par le système informatique, d'une interface utilisateur avec laquelle l'entrée d'utilisateur est apte à spécifier si le programme d'application doit être habilité à accéder au premier type de données ; et
la réception, par le système informatique, d'une entrée d'utilisateur qui spécifie que le programme d'application ne doit pas être habilité à accéder au premier type de données,
et facultativement comprenant en outre :
la fourniture, par le système informatique, d'une deuxième interface utilisateur avec laquelle l'entrée d'utilisateur est apte à spécifier si le deuxième programme d'application doit être habilité à accéder au premier type de données ; et
la réception, par le système informatique, d'une entrée d'utilisateur qui spécifie que le deuxième programme d'application doit être habilité à accéder au premier type de données.

3. Procédé mis en œuvre par ordinateur selon la revendication 1, dans lequel la réalisation de l'action pour empêcher la fourniture du premier type de données, dans le deuxième type de données, depuis le deuxième programme d'application vers le programme d'application sans autorisation de l'utilisateur inclut :
le fait que le système informatique empêche le programme d'application de recevoir le deuxième type de données qui inclut le premier type de données depuis le deuxième programme d'application.

4. Procédé mis en œuvre par ordinateur selon la revendication 1, dans lequel la réalisation de l'action pour empêcher la fourniture du premier type de données, dans le deuxième type de données, depuis le deuxième programme d'application vers le programme d'application sans autorisation de l'utilisateur inclut :
la suppression, par le système informatique, du premier type de données depuis le deuxième type de données ; et
la fourniture, par le système informatique, du deuxième type de données depuis le deuxième programme d'application vers le programme d'application avec le premier type de données supprimé.

5. Procédé mis en œuvre par ordinateur selon la revendication 1, dans lequel la réalisation de l'action pour empêcher la fourniture du premier type de données, dans le deuxième type de données, depuis le deuxième programme d'application vers le programme d'application sans autorisation de l'utilisateur inclut :
le remplacement, par le système informatique, du premier type de données par un identifiant qui n'est pas du premier type de données et à partir duquel le système informatique est apte à accéder ultérieurement au premier type de données en réponse à l'entrée d'utilisateur qui indique que le programme d'application est habilité à accéder au premier type de données.

6. Procédé mis en œuvre par ordinateur selon la revendication 1, comprenant en outre :
la réception, par le système informatique, d'une entrée d'utilisateur qui spécifie que le programme d'application doit être habilité à accéder au premier type de données ; et
l'habilitation, par le système informatique en raison de l'identification que le programme d'application est habilité à accéder au premier type de données, de la fourniture du deuxième type de données depuis le deuxième programme d'application vers le programme d'application sans autorisation d'utilisateur, autre que l'entrée d'utilisateur qui spécifie que le programme d'application doit être habilité à accéder au premier type de données.

7. Procédé mis en œuvre par ordinateur selon la revendication 1 dans lequel :
le premier type de données est des données de localisation géographique et le deuxième type de données est une image ou une vidéo.

8. Un ou plusieurs dispositifs lisibles par ordinateur, incluant des instructions qui, lorsqu'elles sont exécutées par un ou plusieurs processeurs, amènent la réalisation d'opérations qui incluent :
l'identification, par un système informatique, qu'un programme d'application n'est pas habilité à accéder à un premier type de données qui est fourni par un premier programme d'application ;
l'identification, par le système informatique, qu'un deuxième programme d'application est habilité à accéder au premier type de données qui est fourni par le premier programme d'application, dans lequel le deuxième programme d'application fournit un deuxième type de données et est apte à modifier le deuxième type de données pour inclure le premier type de données ;
l'identification, par le système informatique, que le programme d'application est habilité à accéder au deuxième type de données qui est fourni par le deuxième programme d'application ;
la détermination, par le système informatique, que le deuxième type de données qui est fourni par le deuxième programme d'application et auquel le programme d'application est habilité à accéder, inclut le premier type de données ; et
la réalisation, par le système informatique, en raison de l'identification que le programme d'application n'est pas habilité à accéder au premier type de données qui est fourni par le premier programme d'application et de la détermination que le deuxième type de données inclut le premier type de données incorporé dans le deuxième type de données, d'une action pour empêcher la fourniture du premier type de données, dans le deuxième type de données, depuis le deuxième programme d'application vers le programme d'application, sans autorisation de l'utilisateur.

9. Les un ou plusieurs dispositifs lisibles par ordinateur selon la revendication 8, dans lesquels les opérations comprennent en outre :
la fourniture, par le système informatique, d'une interface utilisateur avec laquelle l'entrée d'utilisateur est apte à spécifier si le programme d'application doit être habilité à accéder au premier type de données ; et
la réception, par le système informatique, d'une entrée d'utilisateur qui spécifie que le programme d'application ne doit pas être habilité à accéder au premier type de données,
et facultativement dans lequel les opérations comprennent en outre :
la fourniture, par le système informatique, d'une deuxième interface utilisateur avec laquelle l'entrée d'utilisateur est apte à spécifier si le deuxième programme d'application doit être habilité à accéder au premier type de données ; et
la réception, par le système informatique, d'une entrée d'utilisateur qui spécifie que le deuxième programme d'application doit être habilité à accéder au premier type de données.

10. Les un ou plusieurs dispositifs lisibles par ordinateur selon la revendication 8, dans lesquels la réalisation de l'action pour empêcher la fourniture du premier type de données, dans le deuxième type de données, depuis le deuxième programme d'application vers le programme d'application sans autorisation de l'utilisateur inclut :
le fait que le système informatique empêche le programme d'application de recevoir le deuxième type de données qui inclut le premier type de données depuis le deuxième programme d'application.

11. Les un ou plusieurs dispositifs lisibles par ordinateur selon la revendication 8, dans lesquels la réalisation de l'action pour empêcher la fourniture du premier type de données, dans le deuxième type de données, depuis le deuxième programme d'application vers le programme d'application sans autorisation de l'utilisateur inclut :
la suppression, par le système informatique, du premier type de données depuis le deuxième type de données ; et
la fourniture, par le système informatique, du deuxième type de données depuis le deuxième programme d'application vers le programme d'application avec le premier type de données supprimé.

12. Les un ou plusieurs dispositifs lisibles par ordinateur selon la revendication 8, dans lesquels la réalisation de l'action pour empêcher la fourniture du premier type de données, dans le deuxième type de données, depuis le deuxième programme d'application vers le programme d'application sans autorisation de l'utilisateur inclut :
la fourniture, par le système informatique, d'une interface utilisateur qui indique que le deuxième type de données qui est fourni par le deuxième programme d'application inclut le premier type de données ; et
la réception, par le système informatique, d'une entrée d'utilisateur qui spécifie si le deuxième type de données doit être fourni depuis le deuxième programme d'application vers le programme d'application malgré le fait que le deuxième type de données inclut le premier type de données.

13. Les un ou plusieurs dispositifs lisibles par ordinateur selon la revendication 8, dans lesquels la réalisation de l'action pour empêcher la fourniture du premier type de données, dans le deuxième type de données, depuis le deuxième programme d'application vers le programme d'application sans autorisation de l'utilisateur inclut :
le remplacement, par le système informatique, du premier type de données par un identifiant qui n'est pas du premier type de données et à partir duquel le système informatique est apte à accéder ultérieurement au premier type de données en réponse à l'entrée d'utilisateur qui indique que le programme d'application est habilité à accéder au premier type de données.

14. Les un ou plusieurs dispositifs lisibles par ordinateur selon la revendication 8, dans lesquels les opérations comprennent en outre :
la réception, par le système informatique, d'une entrée d'utilisateur qui spécifie que le programme d'application doit être habilité à accéder au premier type de données ; et
l'habilitation, par le système informatique en raison de l'identification que le programme d'application est habilité à accéder au premier type de données, de la fourniture du deuxième type de données depuis le deuxième programme d'application vers le programme d'application sans autorisation d'utilisateur, autre que l'entrée d'utilisateur qui spécifie que le programme d'application doit être habilité à accéder au premier type de données.

15. Les un ou plusieurs dispositifs lisibles par ordinateur selon la revendication 8, dans lesquels :
le premier type de données est des données de localisation géographique et le deuxième type de données est une image ou une vidéo ;
le premier type de données est une heure de la journée à laquelle un fichier a été généré et le deuxième type de données est le fichier ;
le premier type de données est un auteur d'un document et le deuxième type de données est le document ; ou
le premier type de données est une localisation géographique et le deuxième type de données est des informations d'événement de calendrier.
